# EUROPEAN PATENT APPLICATION

(11) **EP 3 480 723 A1**
(43) Date of publication of application: **08.05.2019**
(21) Application number: 18197092.2
(22) Date of filing: 27.09.2018
(51) Int. Cl.: G06F 21/62, G05B 19/418, G06F 21/60

(54) **METHODS AND DEVICES FOR EDITION, ACQUISITION AND PROTECTION OF SOLAR CELL PRODUCTION PROCESSES**

(30) Priority: 07.11.2017 CN 201711084864
(71) Applicant: Beijing Juntai Innovation Technology Co., Ltd, 100176 Beijing (CN)
(72) Inventor: YANG, Bin, Beijing 100176 (CN)
(74) Representative: Nordmeyer, Philipp Werner

(57) **Abstract**

The present disclosure relates to methods and devices of process editing, acquisition and process data protection for solar cell production apparatus. The process editing method includes: storing (S01) hardware information of the production apparatus of a solar cell production line in a process editing terminal; editing (S02) first process data of at least one of the production apparatus via a process editor in the process editing terminal; and encrypting (S03) the first process data according to the hardware information of the production apparatus stored in the process editing terminal and an encryption method to obtain a first process file of the production apparatus.

## Description

### CROSS-REFERENCE TO RELATED APPLICATION

This application claims priority to Chinese Patent Application No. 201711084864.6, filed on November 7, 2017, titled "Methods and devices of process editing, acquisition and process data protection for solar cell production apparatus", all contents of which are incorporated into this application by reference.

### TECHNICAL FIELD

The present disclosure relates to the technical field of a solar energy production apparatus, and more particularly, to the methods and devices of process editing, acquisition and process data protection for a solar cell production apparatus.

### BACKGROUND

First process data of a solar cell production apparatus, especially a core production apparatus, such as Plasma Enhanced Chemical Vapor Deposition (PECVD), is relatively complicated, and data security is very important.

At present, process data of a solar cell production apparatus is mainly written on site by a technician with specific authority on software of the production apparatus. Due to the complexity of the field personnel, it is easy to cause data leakage. In addition, it is easy to cause incorrect input of process data due to the negligence of personnel.

In the related art, process data of a solar cell production apparatus mainly has two storage methods. One is a storage method of software internal data, and the other is a storage method of a process file. The process data in the first method has high security and cannot be illegally copied, but it cannot be transplanted to other machines, resulting in easy to input incorrect process data. The process data in the second method is easy to be transplanted, but it is easy to be illegally copied, resulting in leakage of the process data.

### SUMMARY

Some embodiments of the present disclosure provide a process editing method for a solar cell production apparatus, wherein the process editing method includes:
storing hardware information of the production apparatus of a solar cell production line, in a process editing terminal;
editing a first process data of at least one of the production apparatus, via a process editor, in the process editing terminal; and
encrypting the first process data, according to the hardware information of the production apparatus stored in the process editing terminal and an encryption method, to obtain a first process file of the production apparatus.

In some embodiments, the first process file further comprises an edit password, which is set such that it is allowed to edit the first process data for the first process file in the case that the edit password has been authenticated.

In some embodiments, the production apparatus is one or more production apparatus of the same type, and the process editor generates the first process file of the one or more production apparatus of the same type in batches.
the process editing method further includes: transmitting the first process file to the production apparatus via a mobile storage device or network communication method.

In some embodiments, the hardware information includes any one or more of the following: a computer hard disk number, a media access (MAC) address, a CPU number of a programmable logic controller (PLC);
the production apparatus includes: a plasma enhanced chemical vapor deposition device, a physical vapor deposition device, a dry etching device, a screen printing device, a diffusion device, a grinding device, a wet etching device, a laminating machine or a welding machine; and
the first process data includes process duration and/or gas flow.

In some embodiments, the production apparatus is a plasma enhanced chemical vapor deposition device, and the first process data includes process duration and gas flow.

Accordingly, some embodiments of the present disclosure further provide a process acquisition method for a solar cell production apparatus, the process acquisition method includes:
setting independently a control component in an execution unit for first process data and a control component in the execution unit for second process data of the production apparatus of a solar cell production line, respectively, as a first control component and a second control component; the second process data is not the process data of the first process data;
setting independently programmable logic controllers PLC for the first control component and the second control component, respectively, as a first control component PLC and a second control component PLC; the first control component PLC is connected with the second control component PLC by communication,
and the first control component PLC is configured to receive the first process data and to control the operation of the first control component;
setting a process decoder in each of the production apparatus, and each of the process decoders has hardware information of the corresponding production apparatus;
verifying, by the process decoder, whether the hardware information in the first process file is consistent with the hardware information in the process decoder, after the production apparatus receives the first process file; and
when the information is consistent, importing the decoded first process data in the first process file into the first control component PLC, so as to control the first control component to execute the decoded first process data and the second control component to execute the second process data.

In some embodiments, the hardware information includes any one or more of the following: a computer hard disk number, a media access (MAC) address, a CPU number of a programmable logic controller (PLC);
the production apparatus includes: a plasma enhanced chemical vapor deposition device, a physical vapor deposition device, a dry etching device, a screen printing device, a diffusion device, a grinding device, a wet etching device, a laminator or a welding machine; and
the first process data includes process duration and/or gas flow.

Accordingly, some embodiments of the present disclosure further provide a process editing device for a solar cell production apparatus used in the process editing method, wherein, the process editing device includes:
a hardware information storage module configured to store the hardware information of the production apparatus of a solar cell production line; and
a process editor configured to edit the first process data of the production apparatus, and to encrypt the first process data according to the hardware information of the production apparatus stored in the process editing terminal and an encryption method to obtain the first process file of the production apparatus.

In some embodiments, the process editor includes:
a first process data editing unit configured to edit the data of first process parameters; and
a first process file generating unit configured to generate the first process file;
alternatively, the process editor includes:
a first process data editing unit configured to edit the data of first process parameters;
a password setting unit configured to set the edit password and/or the encrypted password of the first process file;
a first process file generating unit configured to generate the first process file;
a password verification unit configured to verify the edit password; and
a decoding unit configured to decode the first process file in the case that the edit password has been authenticated.

In some embodiments, in the case that the production apparatus is one or more production apparatus of the same type, the process editor is further configured to generate the first process files of the one or more production apparatus of the same type in batches.

Accordingly, some embodiments of the present disclosure further provide a solar cell production apparatus used in the process acquisition method, wherein, the solar cell production apparatus comprises: a control host and an execution unit,
the execution unit comprises a first control component, a first control component PLC, a second control component and a second control component PLC, the first control component PLC is connected with the second control component PLC by communication, and the first control component PLC is configured to receive the first process data and control the first control component to operate;
the control host is provided with a process decoder and an execution unit control software, the process decoder has hardware information of the production apparatus, and the process decoder and the execution unit control software are set to prohibit the direct transmission of the first process data between the process decoder and the execution unit control software; and
the control host is set to, after receiving the first process file, verify, by the process decoder, whether the hardware information in the first process file is consistent with the hardware information stored in the process decoder, if consistent, import the decoded first process data into the first control component PLC to control the first control component to execute the decoded first process data, and based on the input second process data, the execution unit control software controls the second control component to execute the second process data.

In some embodiments, the hardware information comprises any one or more of the following: a computer hard disk number, a media access (MAC) address, a CPU number of a programmable logic controller (PLC);
the production apparatus comprises: a plasma enhanced chemical vapor deposition device, a physical vapor deposition device, a dry etching device, a screen printing device, a diffusion device, a grinding device, a wet etching device, a laminating machine, or a welding machine; and
the first process data comprises process duration and/or gas flow.

Accordingly, some embodiments of the present disclosure provide a process data protection method for a solar cell production apparatus, wherein, the process data protection method includes:
setting independently a control component in an execution unit for first process data and a control component in the execution unit for second process data of the production apparatus of a solar cell production line, respectively, as a first control component and a second control component; setting independently programmable logic controllers PLC for the first control component and the second control component, respectively, as a first control component PLC and a second control component PLC; the second process data is not the process data of the first process data;
the first control component PLC is connected with the second control component PLC by communication, and the first control component PLC is configured to receive the first process data and control the operation of the first control component;
setting a process editor, a process decoder and an execution unit control software in the control host of the production apparatus, wherein the control host stores the hardware information of each of the production apparatus of the solar cell production line, and the process decoder has the hardware information of the production apparatus; the process decoder is integrated in the process editor; and the process decoder and the execution unit control software are set to prohibit the direct transmission of the first process data between the process decoder and the execution unit control software;
editing the first process data of the production apparatus via the process editor;
in the case that the production apparatus is not the current production apparatus, the first process data is encrypted according to an encryption method and the stored hardware information of the production apparatus, to obtain a first process file of the production apparatus; the first process file is transmitted to the process editor of the control host of the production apparatus; after the process editor of the control host of the production apparatus receives the first process file, the process decoder verifies whether hardware information in the first process file is consistent with hardware information in the process decoder; when the hardware information is consistent, the decoded first process data is imported into the first control component PLC of the production apparatus to control the first control component to execute the decoded first process data; in addition, based on the input second process data, the execution unit control software of the production apparatus controls the second control component to execute the second process data; and
in the case that the production apparatus is the current production apparatus, the edited first process data is imported into the first control component PLC of the current production apparatus to control the first control component to execute the decoded first process data; in addition, based on the input second process data, the execution unit control software of the current production apparatus controls the second control component to execute the second process data.

In some embodiments, the first process file further includes an edit password, and the edit password is set such that it is allowed to edit the first process data for the first process file in the case that the edit password has been authenticated.

In some embodiments, the process data protection method further includes:
sending the decoded first process data to the process editor in the production apparatus, in the case that the production apparatus receives the first process file from other production apparatus, and hardware information in the first process is verified by the process decoder consistent with the hardware information stored in the process decoder; and
editing the first process file sent by other production apparatus to obtain the first process file of the other production apparatus in the case that the edit password has been authenticated.

In some embodiments, the production apparatus is one or more production apparatus of the same type, and the process editor generates the first process files of the one or more production apparatus of the same type in batches.

Accordingly, some embodiments of the present disclosure further provide a process data protection device for a solar cell production apparatus used in the process data protection method, wherein, the process data protection device includes:
a control host and an execution unit,
the control host is provided with a process editor, a process decoder and an execution unit control software, wherein the control host stores hardware information of each of the production apparatus of a solar cell production line, and the process decoder has hardware information of the production apparatus; the process decoder is integrated in the process editor; and the process decoder and the execution unit control software are set to prohibit the direct transmission of the first process data between the process decoder and the execution unit control software;
the execution unit is provided with independently the control component for the first process data and the control component for the second process data of the production apparatus of a solar cell production line, respectively, as the first control component and the second control component; the second process data is not the process data of the first process data; the execution unit is provided with independently the programmable logic controllers PLC for the first control component and the second control component, respectively, as the first control component PLC and the second control component PLC;
the first control component PLC is connected with the second control component PLC by communication, and the first control component PLC is configured to receive the first process data and to control the operation of the first control component;
the process editor is configured to edit the first process data of the production apparatus, and the process editor is configured to,
in the case that the production apparatus is not the current production apparatus, the first process data is encrypted (by the process editor) according to an encryption method and the stored hardware information of the production apparatus, to obtain the first process file of the production apparatus; then the first process file is transmitted to the process editor of the control host of the production apparatus; after the process editor of the control host of the production apparatus receives the first process file, the process decoder verifies whether hardware information in the first process file is consistent with the hardware information in the process decoder; when the hardware information is consistent, decoded first process data is imported into the first control component PLC of the production apparatus to control the first control component to execute the decoded first process data, in addition, based on the input second process data, the execution unit control software of the production apparatus controls a second control component to execute the second process data; and
in the case that the production apparatus is the current production apparatus, the edited first process data is imported into the first control component PLC of the current production apparatus to control the first control component to execute the decoded first process data, in addition, based on the input second process data, the execution unit control software of the current production apparatus controls the second control component to execute the second process data.

In some embodiments, the process editor includes:
a first process data editing unit configured to edit data of a first process parameter; and
a first process file generation unit configured to generate the first process file;
alternatively, the process editor includes:
a first process data editing unit configured to edit data of a first process parameter;
a password setting unit configured to set an edit password and/or an encrypted password of the first process file;
a first process file generating unit configured to generate the first process file;
a password verification unit configured to verify the edit password; and
a decoding unit configured to decode the first process file in the case that the edit password has been authenticated.

In some embodiments, the production apparatus is one or more production apparatus of the same type, and the process editor generates the first process files of the one or more production apparatus of the same type in batches.

### BRIEF DESCRIPTION OF THE DRAWINGS

In order to describe technical solutions in embodiments of the present disclosure or in a related art more clearly, the accompanying drawings to be used in the description of embodiments will be introduced briefly. Obviously, the accompanying drawings described below are merely some embodiments of the present disclosure, and a person skilled in the art can obtain other drawings according to those drawings.
Fig. 1 is a flowchart of the process editing method for solar cell production apparatus according to the embodiments of the present disclosure.
Fig. 2 is a flowchart of a process acquisition method for a solar cell production apparatus according to the embodiments of the present disclosure.
Fig. 3 is a structural diagram of a process editing device for a solar cell production apparatus according to the embodiments of the present disclosure.
Fig. 4 is a structural diagram of a solar cell production apparatus provided according to the embodiments of the present disclosure.
Fig. 5 is a flowchart of a process data protection method for a solar cell production apparatus according to the embodiments of the present disclosure.
Fig. 6 is a structural diagram of a process data protection device for a solar cell production apparatus according to the embodiments of the present disclosure.

### DETAILED DESCRIPTION

The embodiments of the present disclosure are described in detail below, and examples of the embodiments are illustrated in the accompanying drawings, wherein the same or similar reference numbers throughout denote the same or similar parameters or elements having the same or similar function. The embodiments described below are exemplary by reference to the attached drawings, which are only used to explain the present disclosure, but cannot be interpreted as limitation on the present disclosure.

The present disclosure provides methods and devices of process editing, process acquisition, and process protection methods for a solar cell production apparatus, to solve the problem that the first process data in the related art is easily leaked.

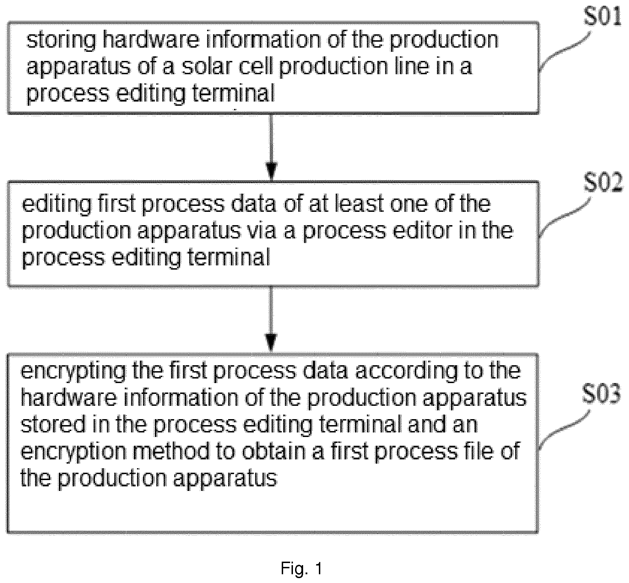

In order to better understand technical solutions and technical effects of the present disclosure, specific embodiments will be described in detail below in conjunction with flowcharts. Fig. 1 is the first flowchart of a process editing method for a solar cell production apparatus provided according to the embodiments of the present disclosure. The method includes the following steps:
step S01, storing the hardware information of a production apparatus of a solar cell production line in a process editing terminal.

In this embodiment, the production apparatus may include: a plasma enhanced chemical vapor deposition (PECVD) device, a physical vapor deposition device, a dry etching device, a screen printing device, a diffusion device, a grinding device, a wet etching device, a laminating machine or a welding machine. Each kind of production apparatus may contain one or more devices, but each production apparatus has its own unique hardware information.

The hardware information includes, but is not limited to, a device computer hard disk number, a Media Access Control address (it is simply referred to as a MAC address or a physical address in the present disclosure), a Central Processing Unit (it is simply referred to as CPU in the present disclosure) number of a Programmable Logic Controller (it is simply referred to as PLC in the present disclosure), and other devices hardware features.
step S02, editing the first process data of at least one of the production apparatus by the process editor in the process editing terminal.

In this embodiment, the production apparatus is the production apparatus ready for receiving the first process data, the production apparatus is one or more production apparatus of the same type, and the process editor generates the first process file for one or more production apparatus of the same type in batches. In other words, the production apparatus may be a single production apparatus of the production line, or multiple apparatuses of the same type, which is not limited here. In this way, the process editing can be realized in batches; the process editing efficiency can be greatly improved, and can avoid data input errors caused by the process editing for each production apparatus on site.

Different kinds of production apparatus have different first process data. For example, as the production apparatus is a plasma enhanced chemical vapor deposition (PECVD) device, process parameters may include: chamber pressure, chamber temperature, process gas, power of supply, and process duration and so on. Wherein, the first process data includes: process duration or gas flow. It should be noted that, not all the process data should be edited in the process editor in the present disclosure, it is possible that only the first process data is edited in the process editor, while the conventional data, such as chamber pressure, chamber temperature, process gas, power of supply and prebaking temperature, i.e., non-first process data are edited in the host of the production apparatus on site. For another example, the first process data of a dry etching device includes: process duration, gas flow, and radio frequency power; the first process data of a diffusion device is process duration, process temperature, and heating rate; and the first process data of a grinding device is process duration, pressure, grinding rate, and so on, which are not listed here. It should be noted that, the control components of different first process data may be different, for example, process duration and gas flow may be controlled by a gas flow valve, the radio frequency power may be controlled by a radio frequency generator, the process temperature may be controlled by a temperature control component, and the grinding rate may be controlled by an electric motor. In addition, since there are some individual differences between different devices of the same kind of device, for example, 100°C of a machine is equivalent to 103°C of another machine, calibration correction values may be set on each machine so that the process parameters uniformly edited may be run in high precision in each machine to achieve good process consistency.
step S03, the first process data is encrypted according to an encryption method and the hardware information of the production apparatus stored in the process editing terminal, to obtain the first process file of the production apparatus.

In this embodiment, any of encryption and decryption method may be adopted as the encryption method by a person skilled in the art according to the actual situation. For example, encryption algorithms such as DES, 3DES, IDEA, RSA, AES, and BLOWFISH are all feasible. In some embodiments, during the process of key generation, the number of encryption may also be changed, such as multi-layer encryption instead of single-layer encryption, and in multi-layer encryption, encryption methods of different layers may be combined differently, which will not be enumerated here. Specifically, the process editor has the hardware information of PECVD machine of the production line. In the case of generating the first process data, a corresponding machine needs to be selected and then generate the first process file according to its hardware information. In addition, the process editor may also edit the process file of a batch of production apparatuses with the same type and specification. Here, the key does not contain the hardware information of the production apparatus, and then the process file is encrypted by using the hardware information of the production apparatus, such as generating an encrypted password of the first process file.

In some embodiments, the first process file further includes an edit password. After the process file is generated, if the process file is to be edited, the first process data of the first process file needs to be edited in the case that the edit password has been authenticated. That is to say, a proprietary password needs to be set in the case of generating the first process file, and the first process file only be edited when the password has been authenticated in the case that the first process file is opened again by the process editor. The first process file undergoes multiple encryptions to effectively ensure the security of the information.

In the case that the technicians need to leave temporarily during the writing process, the process editor may be locked but device software runs as usual. This ensures that the first process data is not leaked during the writing process.

In some embodiments, the process editing method further includes: transmitting the first process file to the production apparatus via a mobile storage device or network communication.

In a specific embodiment, a PECVD method is taken as an example to illustrate that the process editor is responsible for creating, opening, writing, and generating the encrypted first process file; the first process file includes a password of the file itself, corresponding multiple hardware information (including multiple features relating to device hardware such as a device computer hard disk number, a MAC address and a PLC CPU number, etc.) of the PECVD device and the first process data itself.

A process editing method for a solar cell production apparatus provided in the present disclosure includes: storing hardware information of each production apparatus of a solar cell production line in a process editing terminal; editing first process data of the production apparatus via a process editor in the process editing terminal; encrypting the first process data according to the hardware information of the production apparatus stored in the process editing terminal and an encryption method to obtain the first process file of the production apparatus. Since the terminal for process editing is separated from the production apparatus, for example, using a computer with a higher degree of security for offline process editing, rather than using a computer of on-site production apparatus for process editing, the possibility of obtaining the first process data by the personnel around the production apparatus is effectively reduced, and the first process data may be encrypted according to the production apparatus after the first process data is edited. Compared to the existing encrypting method only by algorithms, the present disclosure takes into account that some hardware information of the device has unique characteristics: a computer hard disk number, a MAC address, a PLC CPU number, etc., so that even if the encryption rule is cracked, the final process parameters may not be cracked because of the unique characteristics of the hardware information, thereby greatly improving the data security.

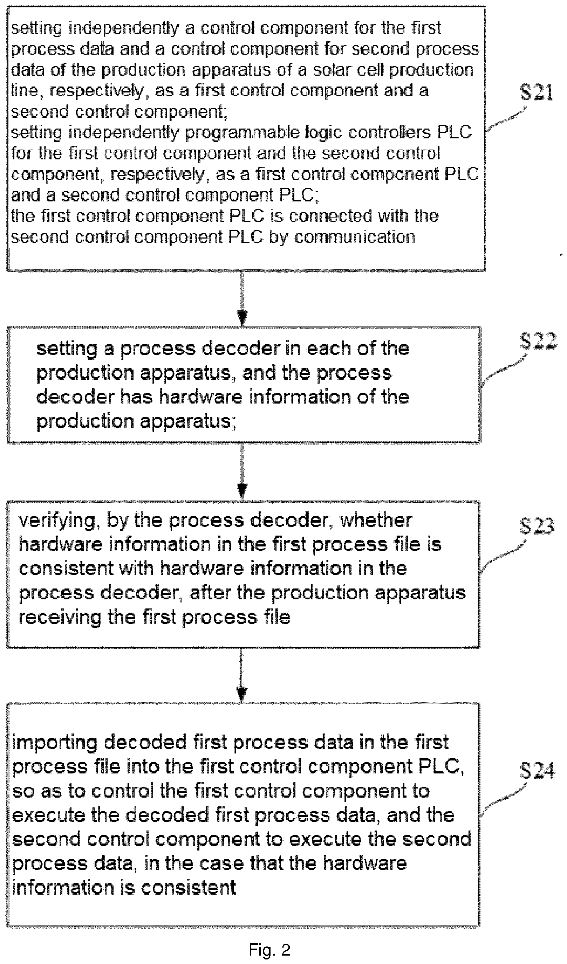

As shown in Fig. 2, it is a flowchart of a process acquisition method for a solar cell production apparatus provided according to the embodiments of the present disclosure.

In this embodiment, the process acquisition method includes:
step S21, a PLC is set separately for the control component of the first process data of the production apparatus, as the first control component PLC, so that the control component of the first process data is separated from the execution unit; the first control component PLC is connected with the second control component PLC by communication, and the first control component PLC is configured to receive the first process data and to control the operation of the first control component. Wherein, the control component of the first process data is simply referred to as the first control component, and remaining control components are simply referred to as the second control component. The second control component executes the second process data, and the second process data is not the process data of the first process data.

In this way, the second control component PLC may not obtain the first process data, thereby further improving the safety of the process data.

In the present embodiment, the production apparatus may include a control host and an execution unit portion. The control host includes: a process decoder and an execution unit control software. The execution unit includes a control component and its PLC for the first process data (i.e., first control component PLC), which are separated from the execution unit, and the second control component and its PLC. The first process data is prohibited from being directly transmitted between the process decoder and the execution unit control software. That is to say, the first process data acquired from the process decoder is transmitted directly to the first control component PLC without passing through the execution unit control software, so device operators cannot see the first process data. The execution unit control software communicates directly with the second control component PLC. Non-first process data may be input in the control software of local execution unit, and then the second control component may be controlled by the second control component PLC.
step S22, a process decoder is separately set in each of the production apparatus, each process decoder has hardware information of the unique production apparatus. In this way, single production apparatus can only run the corresponding first process file, which avoids an occurrence of using the wrong first process data, in addition, also prevents the first process data from being leaked resulting from the first process file is decoded by other production apparatus.

In this embodiment, single production apparatus has a process decoder, and the process decoder is bound to the production apparatus, for example, each process decoder has the hardware information of the unique production apparatus. The hardware information may be hardware information of the current production apparatus input by installers when installing the process encoder, also may be hardware information of the current production apparatus automatically read when installing the process encoder, then the hardware information is solidified in the process decoder. The hardware information includes but is not limited to: a device computer hard disk number, a MAC address, a PLC CPU number, and other device hardware features. In addition, it also may be that, the process decoder first reads the hardware information of the production apparatus to decode the first process file after receiving the first process file.

In doing so, substantially, the process editor and the process decoder are respectively set in different terminals, so that the offline process editing may be achieved and the process of process editing may be performed in a safe and reliable environment, then the first process file is gained after encryption. Production apparatus operators may only see the encrypted first process file, rather than the first process data, which may effectively prevent leaks.

In this embodiment, it may prevent the production apparatus from using the wrong first process file.

Specifically, the production apparatus includes: a plasma enhanced chemical vapor deposition device, a physical vapor deposition device, a dry etching device, a screen printing device, a diffusion device, a grinding device, a wet etching device, a laminating machine or a welding machine.
step S23, after the production apparatus receives the first process file, the process decoder of the production apparatus verifies whether the hardware information in the first process file is consistent with the hardware information in the process decoder.

In this embodiment, the decoding process and the verification process of the process decoder may be the same as the related art. For example, the decoding process and the verification process of the process decoder may include: first identifying the process file, then performing decryption, followed by determining whether the hardware information in the process file is consistent with the hardware information in the process decoder. The hardware information includes any one or more of the following: the computer hard disk number, the MAC address, and the PLC CPU number.
step S24, when the information is consistent, decoded first process data is imported into the first control component PLC to control the first control component to execute the decoded first process data. In addition, based on the input process data, the execution unit control software controls the second control component to execute the second process data.

Specifically, PECVD is taken as an example to illustrate that the process decoder is responsible for verifying whether the hardware information of PECVD machine is consistent with the first process file after decoding the first process file, if consistent, the first process data is imported into PECVD device software or PECVD device PLC. Taking a PECVD device as an example, the first process data includes: process duration and gas flow.

In the process acquisition method for a solar cell production apparatus provided in the present disclosure, the production apparatus is equipped with the process decoder, rather than the process editor. The first process file received by the production apparatus is an encrypted file, and the device operator cannot see the first process data, thereby greatly improving data security.

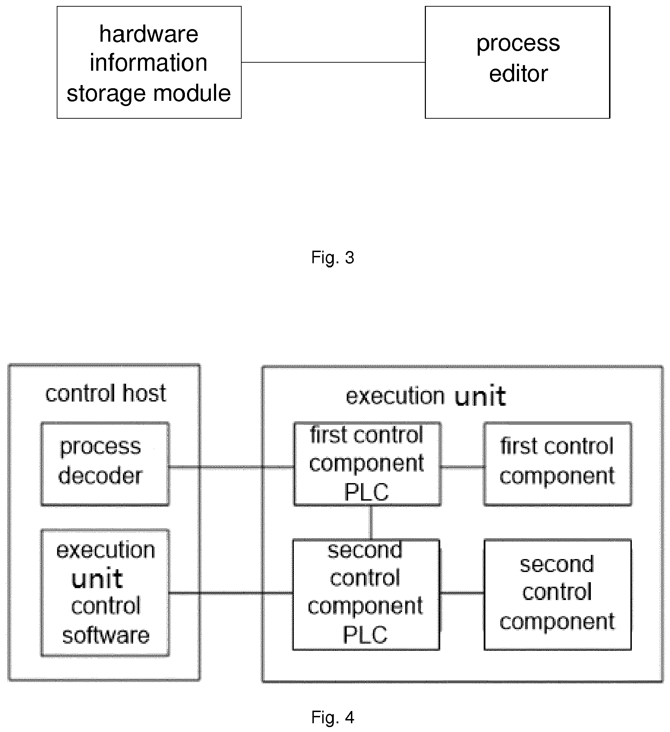

Fig. 3 is a structural diagram of a process editing device for a solar cell production apparatus provided according to the embodiments of the present disclosure.

In this embodiment, the process editing device for a solar cell production apparatus includes a hardware information storage module for storing hardware information of the each of the production apparatus of a solar cell production line. The process editing device further includes a process editor for editing the first process data of the production apparatus in the process editor, and encrypting the first process data according to the hardware information of the production apparatus stored in the hardware information storage module and the encryption method, to obtain the first process file of the production apparatus.

In some embodiments, the process editor includes: a first process data editing unit for editing data of first process parameter, and a first process file generating unit for generating a first process file. Alternatively, the process editor includes: a first process data editing unit for editing data of first process parameter, a password setting unit for setting an edit password and/or an encrypted password of the first process file; a process file generation unit for generating a first process file; a password verification unit for verifying the edit password; and a decoding unit for decoding the first process file if the edit password has been authenticated.

Since there are usually multiple production apparatuses having same type in the production lines, and their first process data is the same. In order to avoid the errors occurred during the process of manual copy, the process editor is also used for generating the first process files of one or more production apparatus of the same type in batches, in the case that the production apparatus is one or more production apparatus of the same type.

In some embodiments, in order to facilitate the transmission of the first process file, the process editing device further includes: a mobile storage device for transmitting the first process file to the production apparatus via the mobile storage device, and/or network for connecting the hosts of each of the production apparatus and transmitting the first process file to the production apparatus via network communication method.

As shown in Fig. 4, it is a structural diagram of a solar cell production apparatus provided according to the embodiments of the present disclosure.

In this embodiment, the solar cell production apparatus includes a control host and an execution unit; the execution unit includes a first control component, a first control component PLC, a second control component and a second control component PLC. The first control component PLC is connected with the second control component PLC by communication. The first control component PLC is configured to receive first process data and to control the operation of the first control component.

The control host is provided with a process decoder and an execution unit control software. The process decoder stores hardware information of the production apparatus, the first process data is prohibited from being directly transmitted between the process decoder and the execution unit control software.

After the control host receives the first process file, the process decoder verifies whether hardware information in the first process file is consistent with hardware information stored in the process decoder. When the hardware information is consistent, decoded first process data is imported into the first control component PLC, so as to control the first control component to execute the decoded first process data. In addition, based on input process data, the execution unit control software controls the second control component to execute the process data. Wherein, the hardware information includes, but is not limited to: a device computer hard disk number, a MAC address, a PLC CPU number, and other device hardware features.

Specifically, the production apparatus includes: a plasma enhanced chemical vapor deposition device, a physical vapor deposition device, a dry etching device, a screen printing device, a diffusion device, a grinding device, a wet etching device, a laminating machine or a welding machine. When the production apparatus is plasma enhanced chemical vapor deposition device, the first process data includes: process duration and gas flow.

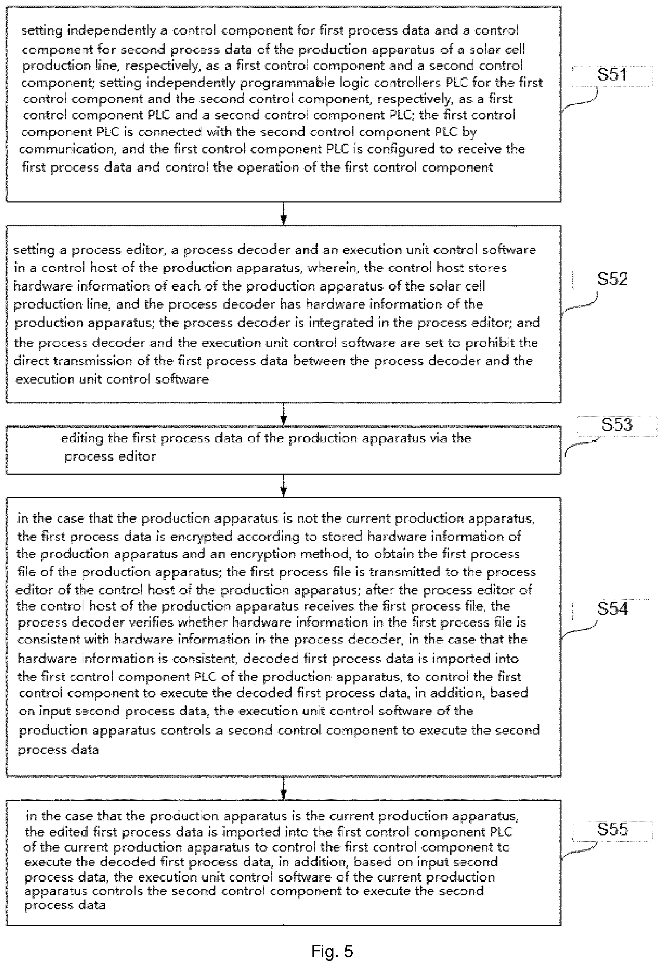

In other embodiments, the present disclosure also provides a process data protection method for a solar cell production apparatus. In this embodiment, a process editor and a process decoder may be set in the same production apparatus, which may realize the online process editing function. As shown in Fig. 5, it is a flowchart of a process data protection method for solar cell production apparatus provided according to the embodiments of the present disclosure.

In this embodiment, the process data protection method for a solar cell production apparatus includes:
step S51, a PLC is separately set for a control component of first process data of the production apparatus, as a first control component PLC, so that the control component of the first process data is separated from an execution unit; the first control component PLC is communicatively connected with a second control component PLC, and the first control component PLC is configured to receive the first process data and control the operation of the first control component.
step S52, a process editor, a process decoder and an execution unit control software are arranged in the control host of the production apparatus, wherein the control host stores hardware information of each production apparatus of a solar cell production line, the process decoder has hardware information of unique production apparatus, the process decoder is integrated in the process editor, and the first process data is prohibited from being directly transmitted between the process editor and the execution unit control software.
   In this embodiment, the hardware information includes but is not limited to, a device hard disk number, a MAC address, a PLC CPU number, and other multiple features relating to device hardware. Only the first process file may be transmitted between the process editor and the execution unit control software. The on-line editing of first process data may be realized due to the process editor.
step S53, the first process data of the production apparatus is edited by the process editor.
step S54, in the case that the production apparatus is not the current production apparatus, the first process data is encrypted according to an encryption method and stored hardware information of the production apparatus, to obtain the first process file of the production apparatus; the first process file is transmitted to the process editor of the control host of the production apparatus; after the process editor of the control host of the production apparatus receives the first process file, the process decoder verifies whether hardware information in the first process file is consistent with that in the process decoder; if consistent, decoded first process data is imported into the first control component PLC of the production apparatus to control a first control component to execute the decoded first process data; in addition, based on input process data, the execution unit control software of the production apparatus controls a second control component to execute the process data.

In this embodiment, file transmission may be performed via a mobile memory or network communication.
step S55, in the case that the production apparatus is the current production apparatus, the edited first process data is imported into the first control component PLC of the current production apparatus to control the first control component to execute the decoded first process data; in addition, based on the input process data, the execution unit control software of the current production apparatus controls the second control component to execute the process data.

In some embodiments, the first process file further includes an edit password. After the process file is generated, if the process file is to be edited, the first process data of the first process file needs to be edited in the case that the edit password has been authenticated. In the case that the technicians need to leave temporarily during the writing process, the process editor may be locked and device software may run as usual. In this way, it ensures that the first process data is not leaked during the writing process.

In some embodiments, the process data protection method further includes:

In the case that the first process file sent by other production apparatus is received, and the process decoder verifies that the hardware information in the first process file is consistent with the hardware information in the process decoder, the first process file or the decoded first process data is sent to the process editor in the same production apparatus. In this way, the process editor of the production apparatus may obtain the first process file transmitted from outside, so as to edit locally. In addition, the locally edited first process file may also be transmitted to other production apparatus, thereby greatly improving the flexibility and convenience of process editing and file transmission.

The first process file is edited to obtain the first process file of the production apparatus in the case that the edit password has been authenticated. The production apparatus may be the current production apparatus, also may be other production apparatus.

In some embodiments, according to the process data protection method provided by the embodiment of the present disclosure, after the first process file is verified and needs to be transplanted to other apparatus, the first process file may be opened by the process editor, and the first process file of the other apparatus is generated in batches.

The first process file is transmitted to the production apparatus via a mobile storage device or network communication.

Specifically, the production apparatus is one or more production apparatus of the same type, and the process editor generates the first process file of one or more production apparatus of the same type in batches. The production apparatus includes any one or more of the following: a plasma enhanced chemical vapor deposition device, a physical vapor deposition device, a dry etching device, a screen printing device, a diffusion device, a grinding device, wet etching device, a laminating machine or a welding machine.

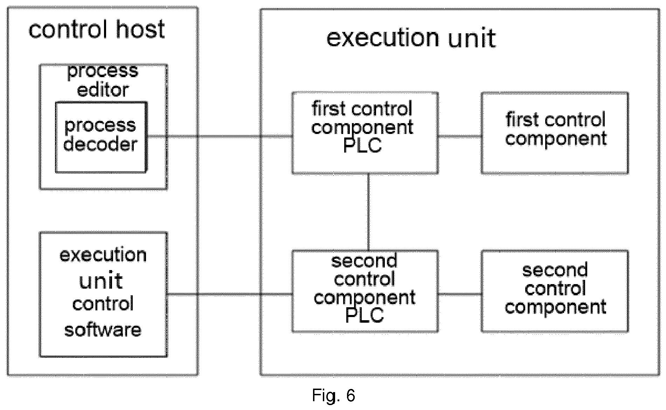

Fig. 6 is a structural diagram of a process data protection device for a solar cell production apparatus provided according to the embodiments of the present disclosure. A process data protection device of the solar cell production apparatus includes:
a control host and an execution unit. The control host is provided with the process editor, the process decoder and the execution unit control software. Wherein, the control host stores hardware information of each of the production apparatus of the solar cell production line, the process decoder has hardware information of unique production apparatus. The process decoder is integrated in the process editor, and the first process data is prohibited from being directly transmitted between the process editor and the execution unit control software.

The control component of the first process data of the production apparatus is provided with a PLC separately, as the first control component PLC, so that the control component of the first process data is separated from an execution unit. The first control component PLC is connected with the second control component PLC by communication, the first control component PLC is configured to receive the first process data and control the operation of the first control component.

The process editor is configured to edit the first process data of the production apparatus. In the case that the production apparatus is not the current production apparatus, the first process data is encrypted according to the encryption method and stored hardware information of the production apparatus by the process editor, to obtain the first process file of the production apparatus; then the first process file is transmitted to the process editor of the control host of the production apparatus; after the process editor of the control host of the production apparatus receives the first process file, the process decoder verifies whether hardware information in the first process file is consistent with the hardware information in the process decoder; when the hardware information is consistent, decoded first process data is imported into the first control component PLC of the production apparatus to control the first control component to execute the decoded first process data, in addition, based on input second process data, the execution unit control software of the production apparatus controls the second control component to execute the second process data. In the case that the production apparatus is the current production apparatus, the edited first process data is imported into the first control component PLC of the current production apparatus to control the first control component to execute the decoded first process data, in addition, based on the input second process data, the execution unit control software of the current production apparatus controls the second control component to execute the second process data.

Specifically, the process editor includes a first process data editing unit configured to edit the data of the first process parameter, and a first process file generation unit configured to generate the first process file. Alternatively, the process editor includes a first process data editing unit configured to edit the data of the first process parameter, a password setting unit configured to set an edit password and/or an encrypted password of the first process file, a first process file generating unit configured to generate the first process file, a password verification unit configured to verify the edit password, and a decoding unit configured to decode the first process file in the case that the edit password has been authenticated.

After the process editor receives a first process file sent by other production apparatus, and the process decoder verifies whether hardware information in the first process file is consistent with that in the process decoder, The process editor is configured to edit the first process file to obtain a first process file of the production apparatus, in the case that the hardware information in the first process file is consistent with that in the process decoder and the edit password has been authenticated, and then the first process file is transmitted to the production apparatus via a mobile storage device or network communication.

For example, the production apparatus is one or more production apparatus of the same type, and the process editor generates the first process file of the one or more production apparatus of the same type in batches. The production apparatus includes any one or more of the following: a plasma enhanced chemical vapor deposition device, a physical vapor deposition device, a dry etching device, a screen printing device, a diffusion device, a grinding device, a wet etching device, a laminating machine, or a welding machine. When the production apparatus is a plasma enhanced chemical vapor deposition device, the first process data includes: process duration and gas flow.

In the description provided herein, a great number of specific details are explained. However, it can be understood that the embodiments of the present disclosure may be practiced without these specific details. In some instances, well-known methods, structures and techniques are not shown in detail, in order not to obscure the understanding of this description.

Similarly, it should be understood that, in order to simplify the present disclosure and aid in the understanding of one or more of the various aspects of the present disclosure, various features of the present disclosure are sometimes grouped together into a single embodiment, diagram, or description thereof in the foregoing description of the exemplary embodiments of the present disclosure. However, the disclosed method should not be interpreted as reflecting an intention that the claimed disclosure requires more features than those features specifically recited in each claim.

A person skilled in the art can understand that the modules of the device in the embodiments can be adaptively changed and set them in one or more devices different from these embodiments. Modules or units or components in the embodiments may be combined into one module or unit or component, and further they may be divided into a plurality of sub-modules or sub-units or sub-components. Except for the fact that at least some of such features and/or processes or units are mutually exclusive, any combination may be used for combining all features disclosed in this specification (including accompanying claims, abstracts and drawings) and all the processes or units of any method or device disclosed herein. Unless otherwise stated explicitly, each feature disclosed in this specification (including accompanying claims, abstract and drawings) may be replaced by alternative features serving the same, equivalent, or similar purpose.

In addition, a person skilled in the art may understand that the embodiments described herein include some features in other embodiments rather than other features, but combinations of features of different embodiments mean to be within the scope of the present disclosure and form different embodiments. For example, in the following claims, any of embodiments sought to be protected may be used in any combination.

The embodiments having various component of the present disclosure may be implemented in hardware, or in software modules running in one or more processors, or in combinations thereof. A person skilled in the art should understand that a microprocessor or a digital signal processor (DSP) may be used in practice to implement some or all of functions in a system for multi-operating-terminally remotely manipulating a single operation object according to some embodiments of the present disclosure. The present disclosure may also be implemented as system programs (such as computer programs and computer program products) or devices for performing part or all of the methods described herein. Such programs implementing the present disclosure may be stored in a computer-readable medium or may have the form of one or more signals. Such signals may be downloaded from the Internet website, or may be provided in carrier signals, or may be provided in any other forms.

It should be noted that, the above-mentioned embodiments illustrate rather than limit the present disclosure, and a person skilled in the art may design alternative embodiments without departing from the scope of the appended claims. In the claims, any reference signs placed between parentheses shall not be construed as limiting the claims. The word "comprising" does not exclude the presence of elements or steps that are not listed in the claims. The word "a" or "an" preceding an element does not exclude the presence of a plurality of such elements. The present disclosure may be implemented by means of hardware including several different elements and by means of a suitably programmed computer. In the unit claims enumerating several systems, several ones of these systems may be embodied by the same hardware item. Use of the words "first", "second", "third", etc does not indicate any order, and these words are interpreted as names.

## Claims

1. A process editing method for a solar cell production apparatus, the process editing method comprises:
storing (S01) hardware information of the production apparatus of a solar cell production line in a process editing terminal;
editing (S02) first process data of at least one of the production apparatus by a process editor in the process editing terminal; and
encrypting (S03) the first process data according to the hardware information of the production apparatus stored in the process editing terminal and an encryption method to obtain a first process file of the production apparatus;
optionally, in the case that the production apparatus is one or more production apparatus of the same type, the process editor generates the first process file of the one or more production apparatus of the same type in batches;
optionally, the process editing method further comprises:
transmitting first process file to the production apparatus via a mobile storage device or network communication.

2. The process editing method according to claim 1, wherein the first process file further comprises an edit password, which is set such that it is allowed to edit the first process data for the first process file in the case that the edit password has been authenticated.

3. The process editing method according to claim 1, wherein, the hardware information comprises any one or more of the following: a computer hard disk number, a media access (MAC) address, a CPU number of a programmable logic controller (PLC);
the production apparatus comprises: a plasma enhanced chemical vapor deposition device, a physical vapor deposition device, a dry etching device, a screen printing device, a diffusion device, a grinding device, a wet etching device, a laminating machine, or a welding machine; and
the first process data comprises: process duration and/or gas flow.

4. The process editing method according to claim 3, wherein the production apparatus is a plasma enhanced chemical vapor deposition device, and the first process data comprises process duration and gas flow.

5. A process acquisition method for a solar cell production apparatus, the process acquisition method comprises:
setting (S21) independently a control component in an execution unit for the first process data and a control component in the execution unit for second process data of the production apparatus of a solar cell production line, respectively, as a first control component and a second control component; the second process data is not the process data of the first process data;
setting independently programmable logic controllers PLC for the first control component and the second control component, respectively, as a first control component PLC and a second control component PLC; wherein,
the first control component PLC is connected with the second control component PLC by communication, and the first control component PLC is configured to receive the first process data and to control the operation of the first control component;
setting (S22) a process decoder in each of the production apparatus, and the process decoder has hardware information of the production apparatus;
verifying (S23), by the process decoder, whether hardware information in the first process file is consistent with hardware information in the process decoder, after the production apparatus receiving the first process file; and
importing (S24) decoded first process data in the first process file into the first control component PLC, so as to control the first control component to execute the decoded first process data, and the second control component to execute the second process data, in the case that the hardware information is consistent.

6. The process acquisition method according to claim 5, wherein
the hardware information comprises any one or more of the following: a computer hard disk number, a media access (MAC) address, a CPU number of a programmable logic controller (PLC);
the production apparatus includes: a plasma enhanced chemical vapor deposition device, a physical vapor deposition device, a dry etching device, a screen printing device, a diffusion device, a grinding device, a wet etching device, a laminator or a welding machine; and
the first process data comprises: process duration and/or gas flow.

7. A process editing device for a solar cell production apparatus used in the process editing method according to claim 1, the process editing device comprises:
a hardware information storage module configured to store the hardware information of the production apparatus of the solar cell production line; and
a process editor configured to edit the first process data of the production apparatus, and to encrypt the first process data according to the hardware information stored in the hardware information storage module and the encryption method, to obtain the first process file of the production apparatus;
optionally, in the case that the production apparatus is one or more production apparatus of the same type, the process editor is further configured to generate the first process file of the one or more production apparatus of the same type in batches.

8. The process editing device according to claim 7, wherein, the process editor comprises:
a first process data editing unit configured to edit data of a first process parameter; and
a first process file generating unit configured to generate the first process file;
alternatively, the process editor comprises:
a first process data editing unit configured to edit data of a first process parameter;
a password setting unit configured to set an edit password and/or an encrypted password of the first process file;
a first process file generating unit configured to generate the first process file;
a password verification unit configured to verify the edit password; and
a decoding unit configured to decode the first process file in the case that the edit password has been authenticated.

9. A solar cell production apparatus used in the process acquisition method according to claim 5, the solar cell production apparatus comprises:
a control host and an execution unit,
the execution unit comprises a first control component, a first control component PLC, a second control component and a second control component PLC, the first control component PLC is connected with the second control component PLC by communication, and the first control component PLC is configured to receive the first process data and to control the operation of the first control component;
the control host is provided with a process decoder and an execution unit control software, the process decoder has hardware information of the production apparatus, and the process decoder and the execution unit control software are provided set to prohibit the direct transmission of the first process data between the process decoder and the execution unit control software; and
the control host is set to, after receiving the first process file, verify whether the hardware information in the first process file is consistent with the hardware information stored in the process decoder by the process decoder, in the case that the hardware information is consistent, decoded first process data is imported into the first control component PLC to control the first control component to execute the decoded first process data, and based on input second process data, the execution unit control software controls the second control component to execute the second process data.

10. The solar cell production apparatus according to claim 9, wherein
the hardware information comprises any one or more of the following: a computer hard disk number, a media access (MAC) address, a CPU number of a programmable logic controller (PLC);
the production apparatus comprises: a plasma enhanced chemical vapor deposition device, a physical vapor deposition device, a dry etching device, a screen printing device, a diffusion device, a grinding device, a wet etching device, a laminating machine, or a welding machine; and
the first process data comprises: process duration and/or gas flow.

11. A process data protection method for a solar cell production apparatus, the process data protection method comprises:
setting (S51) independently a control component in an execution unit for first process data and a control component in the execution unit for second process data of the production apparatus of a solar cell production line, respectively, as a first control component and a second control component; setting independently programmable logic controllers PLC for the first control component and the second control component, respectively, as a first control component PLC and a second control component PLC; the second process data is not the process data of the first process data;
the first control component PLC is connected with the second control component PLC by communication, and the first control component PLC is configured to receive the first process data and control the operation of the first control component;
setting (S52) a process editor, a process decoder and an execution unit control software in a control host of the production apparatus, wherein, the control host stores hardware information of each of the production apparatus of the solar cell production line, and the process decoder has hardware information of the production apparatus; the process decoder is integrated in the process editor; and the process decoder and the execution unit control software are set to prohibit the direct transmission of the first process data between the process decoder and the execution unit control software;
editing (S53) the first process data of the production apparatus via the process editor;
encrypting (S54), in the case that the production apparatus is not the current production apparatus, the first process data according to stored hardware information of the production apparatus and an encryption method, to obtain the first process file of the production apparatus; the first process file is transmitted to the process editor of the control host of the production apparatus; after the process editor of the control host of the production apparatus receives the first process file, the process decoder verifies whether hardware information in the first process file is consistent with hardware information in the process decoder, in the case that the hardware information is consistent, decoded first process data is imported into the first control component PLC of the production apparatus, to control the first control component to execute the decoded first process data, in addition, based on input second process data, the execution unit control software of the production apparatus controls a second control component to execute the second process data; and
importing (S55), in the case that the production apparatus is the current production apparatus, the edited first process data into the first control component PLC of the current production apparatus to control the first control component to execute the decoded first process data, in addition, based on input second process data, the execution unit control software of the current production apparatus controls the second control component to execute the second process data.

12. The process data protection method according to claim 11, wherein, the first process file further comprises an edit password, which is set such that it is allowed to edit the first process data for the first process file in the case that the edit password has been authenticated.

13. The process data protection method according to claim 12, wherein, the process data protection method further comprises:
sending the decoded first process data to the process editor in the production apparatus, in the case that the production apparatus receives the first process file from other production apparatus, and the process decoder verifies the hardware information in the first process file to be consistent with the hardware information stored in the process decoder; and
editing the first process file sent by other production apparatus to obtain the first process file of other production apparatus in the case that the edit password has been authenticated;
optionally, in the case that the production apparatus is one or more production apparatus of the same type, the process editor generates the first process file of the one or more production apparatus of the same type in batches.

14. A process data protection device for a solar cell production apparatus used in the process data protection method according to claim 11, the process data protection device comprises:
a control host and an execution unit,
the control host is provided with the process editor, the process decoder and the execution unit control software, wherein the control host stores hardware information of each of the production apparatus of the solar cell production line, and the process decoder has hardware information of the production apparatus; the process decoder is integrated in the process editor; and the process decoder and the execution unit control software are set to prohibit the direct transmission of the first process data between the process decoder and the execution unit control software;
the execution unit is provided with independently the control component for the first process data and the control component for the second process data of the production apparatus of the solar cell production line, respectively, as the first control component and the second control component; the second process data is not the process data of the first process data; the execution unit is further provided with independently the programmable logic controllers PLC for the first control component and the second control component, respectively, as the first control component PLC and the second control component PLC;
the first control component PLC is connected with the second control component PLC by communication, and the first control component PLC is configured to receive the first process data and to control the operation of the first control component;
the process editor is configured to edit the first process data of the production apparatus, and the process editor is configured to,
in the case that the production apparatus is not the current production apparatus, the first process data is encrypted according to the encryption method and stored hardware information of the production apparatus by the process editor, to obtain the first process file of the production apparatus; then the first process file is transmitted to the process editor of the control host of the production apparatus; after the process editor of the control host of the production apparatus receives the first process file, the process decoder verifies whether hardware information in the first process file is consistent with hardware information in the process decoder; in the case that the hardware information is consistent, decoded first process data is imported into the first control component PLC of the production apparatus to control the first control component to execute the decoded first process data, in addition, based on input second process data, the execution unit control software of the production apparatus controls a second control component to execute the second process data; and
in the case that the production apparatus is the current production apparatus, the edited first process data is imported into the first control component PLC of the current production apparatus to control the first control component to execute the decoded first process data, in addition, based on input second process data, the execution unit control software of the current production apparatus controls the second control component to execute the second process data.

15. The process data protection device according to claim 14, wherein
the process editor comprises:
a first process data editing unit configured to edit data of a first process parameter; and
a first process file generation unit configured to generate the first process file;
alternatively, the process editor comprises:
a first process data editing unit configured to edit data of a first process parameter;
a password setting unit configured to set an edit password and/or an encrypted password of the first process file;
a first process file generating unit configured to generate the first process file;
a password verification unit configured to verify the edit password; and
a decoding unit configured to decode the first process file in the case that the edit password has been authenticated;
optionally, in the case that the production apparatus is one or more production apparatus of the same type, the process editor is configured to generate the first process file of the one or more production apparatus of the same type in batches.
